# FASCICULE DE BREVET EUROPEEN

(11) **EP 0 456 548 B1**
(45) Date de publication et mention de la délivrance du brevet: **21.06.1995**
(21) Numéro de dépôt: 91401108.5
(22) Date de dépôt: 25.04.1991
(51) Int. Cl.: G07F 7/10

(54) **Dispositif de traitement de données de haute sécurité à deux états de fonctionnement**
Vorrichtung zur Bearbeitung von Hochsicherheitsdaten mit zwei Betriebsständen
Device for treating high-security data with two operational states

(30) Priorité: 10.05.1990 FR 9005830
(43) Date de publication de la demande: 13.11.1991
(73) Titulaire: DASSAULT AUTOMATISMES ET TELECOMMUNICATIONS, F-78370 Plaisir (FR)
(72) Inventeur: Besson, Richard, F-78960 Voisins-le-Bretonneux (FR)
(74) Mandataire: Plaçais, Jean-Yves

(56) Documents cités:
- EP-A- 0 328 289
- EP-A- 0 331 407
- WO-A-82/00213
- FR-A- 2 592 502
- GB-A- 2 189 741
- US-A- 4 277 837
- US-A- 4 623 965
- US-A- 4 719 338
- US-A- 4 870 604

## Description

L'invention concerne la sécurisation de données.

Elle trouve une application dans la transaction par carte de paiement à partir d'appareils de paiement électroniques installés chez les commerçants que l'on appelle aussi terminaux de point de vente ou terminaux d'encaissement.

Actuellement, pour ce qui le concerne, le commerçant saisit le montant de la transaction à partir de l'unité à clavier du terminal de point de vente tandis que, pour ce qui le concerne, le client peut ratifier la transaction par sa signature, ou bien par la composition de son code confidentiel, sur un petit appareil séparé, dit boîtier client (FR-A-2 596 176, FR-A-2 608 338).

Le plus souvent, des précautions poussées sont prises au niveau du boîtier client, pour conserver la confidentialité de ce code et atteindre ainsi un degré de sécurité élevé.

Maintenant, la Demanderesse se propose de réaliser un terminal de point de vente répondant à la double exigence suivante :
1°) permettre sur la même unité à clavier à la fois la composition du code confidentiel (information secrète) et la saisie de données non secrètes liées à une transaction telle que son montant, et
2°) sécuriser le traitement des données ainsi saisies et/ou composées notamment du code confidentiel.

Un tel terminal est réalisé à partir d'un dispositif de traitement de données comprenant une unité d'utilisateur pour la saisie et/ou la visualisation de données et une unité principale de traitement de données selon un algorithme de traitement prédéterminé.

Selon une définition générale de l'invention, le dispositif de traitement de données comprend en outre :
- une unité auxiliaire de traitement, de haute sécurité, connectée pour assurer la totalité des échanges de données entre l'unité utilisateur et l'unité principale de traitement, et comprenant :
. des moyens de sécurisation de données,
. des moyens de transfert de données ayant un état normal, et un état de sécurité dans lequel sont sécurisées au moins les données transférées dans un sens, l'algorithme de traitement de l'unité principale déterminant l'état de fonctionnement de ces moyens de transfert de données,
. des moyens propres à contrôler l'authenticité dudit algorithme de traitement, et agissant de façon autonome, et
. des moyens propres à inhiber totalement les moyens de transfert de données en cas d'authenticité non confirmée par ledit contrôle.

Dans un tel dispositif, les données saisies et/ou visualisées par l'utilisateur peuvent être ainsi traitées selon leur nature soit en clair soit chiffrées d'une part et ces données sont traitées seulement lorsque l'algorithme de traitement est authentique d'autre part. Il en résulte un degré de sécurité élevé pour le traitement des données saisies et/ou visualisées par l'utilisateur.

Selon un mode particulier de réalisation de l'invention, l'unité principale de traitement comprend un processeur adressant deux mémoires dont l'une au moins est permanente, et contient les programmes de base dudit algorithme de traitement, lequel gère la partition d'adresse entre les deux mémoires, et les moyens de contrôle d'authenticité vérifient la signature du contenu des deux mémoires.

Avantageusement, l'autre mémoire est du type vive ou volatile.

Selon un autre mode particulier de l'invention, les moyens de contrôle d'authenticité vérifient la signature d'au moins une partie du contenu des deux mémoires selon un accès quasi-aléatoire.

De préférence, les moyens de sécurisation de données comprennent des moyens de chiffrement et/ou des moyens de compression de données.

En pratique, la signature du contenu total ou partiel des deux mémoires est effectuée par les moyens de compression.

Dans un mode particulier de réalisation de l'invention, les programmes de base de l'algorithme de traitement ainsi que sa signature préalablement calculée en un site protégé non public sont chargés dans la mémoire permanente en un site également protégé non public.

Selon un aspect de l'invention, le dispositif est équipé d'une interface de communication telle qu'un modem.

Dans un autre mode de réalisation de l'invention, les programmes de base de l'algorithme de traitement ainsi que sa signature préalablement calculée en un site protégé non public sont chargés via l'interface de communication dans la mémoire vive en un site qui peut être non protégé, et les moyens de compression calculent la signature des programmes de base ainsi chargés tandis que les moyens de contrôle d'authenticité comparent la signature ainsi calculée à la signature chargée via l'interface de communication.

Dans le cas d'un algorithme de traitement contrôlé non authentique, ledit algorithme de traitement peut être remplacé par un algorithme de traitement complémentaire chargé via l'interface de communication dans la mémoire vive avec sa signature calculée préalablement en un site protégé non public, et les moyens de compression calculent la signature associée à l'algorithme complémentaire tandis que les moyens de contrôle d'authenticité comparent la signature ainsi calculée à la signature chargée via l'interface de communication. Le remplacement de l'algorithme de traitement contrôlé non authentique par un algorithme complémentaire peut s'effectuer en un site non protégé.

Dans la mesure où l'invention s'applique à la transaction par carte de paiement, les données à traiter comprennent des données du type code confidentiel.

Selon un aspect de l'invention, l'unité utilisateur comprend un clavier propre à l'analyse matricielle par lignes et par colonnes tandis que l'unité auxiliaire de traitement est capable d'appliquer des impulsions d'interrogation à chacune des lignes du clavier, tout en scrutant les colonnes du clavier, une touche enfoncée produisant un contact ligne-colonne spécifique, l'unité auxiliaire de traitement étant munie de liaisons bidirectionnelles vers certaines au moins des colonnes et lignes du clavier et comportant des moyens pour simuler de faux actionnements de touche, certaines au moins des impulsions d'interrogation étant appliquées en même temps à au moins une ligne et au moins une colonne, ce qui entrave la possibilité d'interception du code confidentiel par espionnage de l'état des lignes et colonnes du clavier.

Selon un autre aspect de l'invention, les moyens de sécurisation de données sont aptes à authentifier des données reçues d'une unité distante via le modem, ou à certifier des données de transaction émises à ladite unité distante via ledit modem.

Selon une autre caractéristique importante de l'invention, le dispositif est logé dans un boîtier préhensible à la main.

Avantageusement, le dispositif selon l'invention trouve une utilisation dans l'authentification d'une installation télématique comprenant un dispositif conforme à l'invention relié à une unité distante. (authentification des extrêmes).

D'autres caractéristiques et avantages de l'invention apparaîtront à la lumière de la description détaillée ci-après, et des dessins annexés dans lesquels :
- la figure 1 est une vue en élévation montrant un dispositif de traitement de données préhensible à la main selon l'invention ;
- la figure 2 est une vue de côté du dispositif de la figure 1 ; et
- la figure 3 est le schéma électrique des circuits contenus à l'intérieur du dispositif de traitement conforme à l'invention.

Les dessins annexés comportent de nombreux éléments de caractère certain. En conséquence, ils sont incorporés à la description non seulement pour permettre de mieux comprendre celle-ci, mais aussi contribuer à la définition de l'invention, le cas échéant.

Par ailleurs, dans la description détaillée ci-après, on considérera seulement le cas d'un terminal de transaction bancaire, étant observé que l'application de l'invention peut être plus générale.

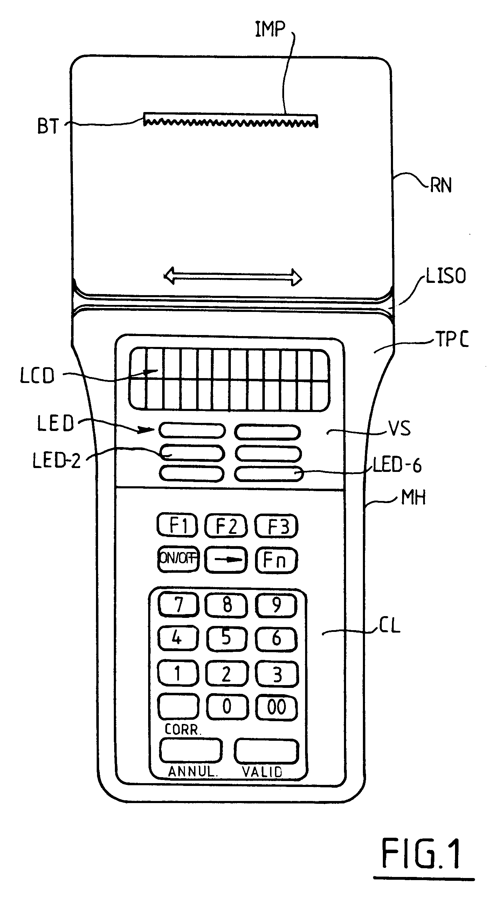

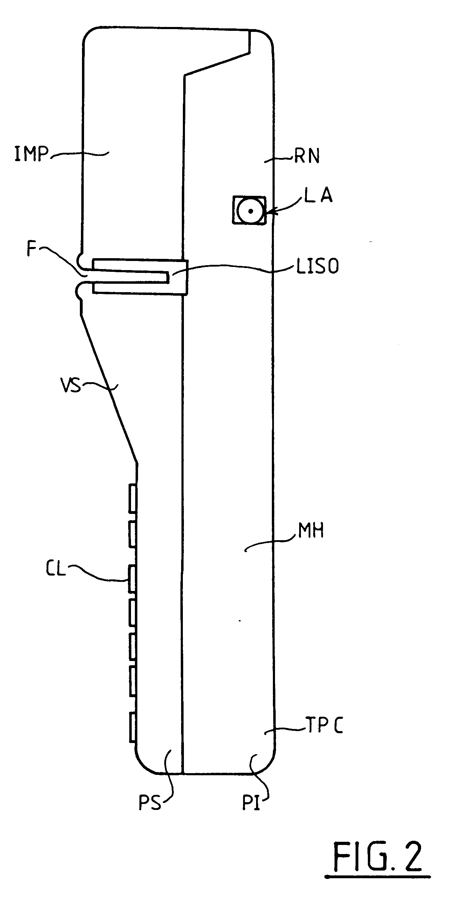

Sur la figure 1, la référence TPC désigne un terminal de transaction préhensible à la main, qui peut être un terminal de paiement électronique (série E 232 vendue par la Demanderesse).

Ce terminal a une forme générale parallélépipédique ayant un manche MH destiné à être pris en main par l'utilisateur et une partie renflée RN destinée à recevoir un module d'impression IMP. Le terminal est constitué d'une partie supérieure PS et d'une partie inférieure PI s'emboîtant l'une dans l'autre pour former un boîtier.

Une unité à clavier CL est logée dans la partie supérieure PS du manche MH. Les touches du clavier s'étendent sur la face externe de la partie supérieure PS. Par exemple, l'unité à clavier a vingt touches dont dix-huit sont agencées en un tableau de six lignes et trois colonnes et dont deux touches sont libres. On peut ainsi définir six touches de fonction F1, F2, F3, FN, ON/OFF, et une flèche horizontale, dix touches numériques 0 à 9, une touche d'effacement CORR et une touche de virgule 00. Les deux touches libres définissent par exemple les fonctions d'annulation et de validation.

Un module de visualisation VS est également logé dans la partie supérieure PS du manche MH. Le module de visualisation comprend un dispositif d'affichage à cristaux liquides LCD et un dispositif d'indications lumineuses à diodes LED. Le module de visualisation s'étend entre le clavier CL et la partie renflée RN. Avantageusement, la face extérieure du module de visualisation est légèrement inclinée pour permettre une meilleure visualisation des indications du module.

Par exemple, le dispositif d'affichage LCD comprend deux rangées de seize éléments-images. De son côté, le dispositif d'indications lumineuses comprend six diodes individualisées en LED-1 à LED-6. Ces diodes permettent l'indication de l'état de fonctionnement des différents éléments du terminal.

Comme représenté en figure 2, le terminal est traversé dans sa largeur par une fente F ménagée entre le module de visualisation VS et la partie renflée RN. Un lecteur de carte LISO enveloppe la fente F pour permettre la lecture d'une carte de paiement de type classique lorsque celle-ci est introduite dans la fente et déplacée le long de celle-ci dans un sens ou dans l'autre.

Un module d'impression IMP est logé dans la partie renflée RN. Il s'agit par exemple d'une imprimante à aiguille. La bande de papier est par exemple déchirée au moyen d'un bord tranchant BT faisant saillie par rapport à la partie supérieure PS de la partie renflée RN.

Une connexion d'alimentation LA est prévue pour permettre une alimentation externe du terminal.

Il est également prévu une connexion (non représentée) pour permettre une liaison de type télématique du terminal avec des unités de traitement distantes.

Les dimensions du terminal sont par exemple les suivantes.

La longueur totale du terminal est de l'ordre de 270 mm. Les longueur, largeur et épaisseur du manche MH sont respectivement de l'ordre de 110 mm, 90 mm, et 50 mm. Les longueur, largeur et épaisseur de la partie renflée RN sont respectivement de l'ordre de 120 mm, 110 mm et 70 mm.

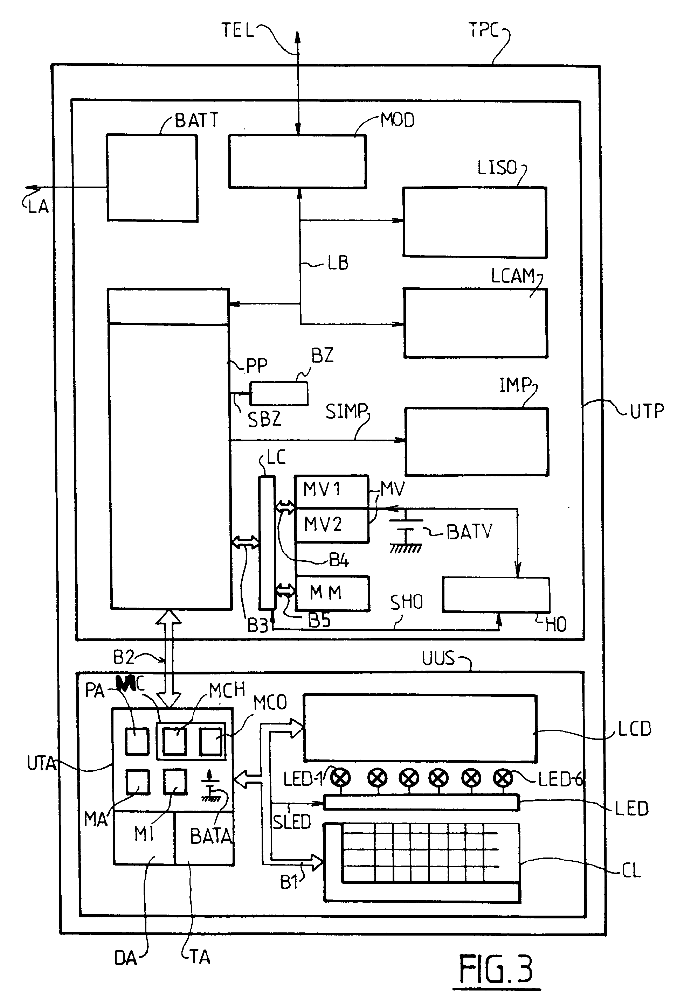

Sur le schéma électrique de la figure 3, on retrouve en TPC, les limites extérieures du terminal.

Selon l'invention, le terminal TPC est subdivisé en une unité utilisateur sécurisée UUS et une unité principale de traitement UTP.

Comme mentionné ci-avant en référence aux figures 1 et 2, l'unité utilisateur comporte un clavier CL à vingt touches, un dispositif d'indications lumineuses LED et un dispositif d'affichage LCD.

Selon une définition générale de l'invention, il est prévu une unité auxiliaire de traitement UTA, de haute sécurité, connectée pour assurer la totalité des échanges de données entre l'unité utilisateur UUS et l'unité principale de traitement UTP.

Par exemple, l'unité auxiliaire de traitement est constituée d'un circuit intégré hybride ou monolithique, protégé de résine.

La description des éléments constitutifs du terminal selon l'invention comporte des informations techniques suffisantes pour qu'un homme du métier puisse l'exécuter, notamment en ce qui concerne les éléments constitutifs de l'unité auxiliaire de traitement même si ces derniers sont décrits plus sommairement, compte tenu de leur application sécuritaire.

L'unité auxiliaire de traitement UTA comprend un microprocesseur PA et des mémoires internes DA et TA qui sont au moins en partie non volatiles, et interconnectées par un bus interne avec le microprocesseur PA. Les mémoires internes DA et TA sont par exemple de type RAM CMOS sauvegardées par une pile BATA noyée dans la résine en l'absence d'alimentation du terminal.

Un circuit de protection MC, équipé de moyens de chiffrement MCH et des moyens de compression MCO, est logé dans le circuit intégré hybride. C'est lui notamment qui confère la propriété de haute sécurité à l'unité auxiliaire de traitement. Il comprend des clés secrètes qui sont capables de chiffrer les données selon une norme internationale de chiffrement de données telle que celle dite "Data Encryption Standard" (DES).

Le bus externe B1 permet le transit des données entre les éléments constitutifs CL et LCD de l'unité utilisateur et ceux de l'unité auxiliaire de traitement UTA.

Une ligne de commande SLED montée entre l'unité auxiliaire de traitement et le dispositif d'indications lumineuses LED permet la commande des diodes dudit dispositif d'indications lumineuses.

Il est prévu également un bus externe B2 permettant le transfert des données entre l'unité auxiliaire de traitement et l'unité principale de traitement. Le circuit de protection MC est interposé entre le bus interne de l'unité auxiliaire de traitement et le bus externe B2. Ainsi, l'unité auxiliaire de traitement est capable de faire transiter via ledit circuit de protection MC, les données chiffrées et stockées dans les mémoires internes DA et TA.

De son côté, l'unité principale de traitement comprend un microprocesseur PP. Le bus d'adresse B3 de celui-ci traverse une logique de commande LC pour venir en B4 vers une mémoire vive MV subdivisée en deux mémoires vives MV1 et MV2, ainsi que pour venir en B5 vers une mémoire morte MM.

Les deux mémoires MM et MV conservent leurs contenus : la mémoire morte MM de façon permanente, et la mémoire vive MV grâce à une sauvegarde par batterie (ou pile) BATV. Selon l'invention, la mémoire morte MM contient les programmes de base de l'algorithme de traitement et la gestion de la partition d'adresse des deux mémoires. La mémoire vive MV contient les programmes et données qui peuvent être téléchargés comme nous le verrons plus en détail ci-après.

Par exemple, les mémoires vives MV1 et MV2 sont de type RAM CMOS, la capacité respective de MV1 et MV2 a une valeur par exemple comprise entre 32 kilo-octets et 128 kilo-octets. La mémoire morte MM est de type par exemple EPROM. Sa capacité a une valeur par exemple comprise entre 64 kilo-octets et 128 kilo-octets.

On notera qu'une pile ou batterie BATT raccordée à la connexion LA sauvegarde les fonctionnalités de l'ensemble du terminal. Avantageusement, une alimentation BATV assure la sauvegarde des informations contenues dans les RAM CMOS en l'absence d'alimentation du terminal. Les informations contenues dans les RAM CMOS sont immédiatement perdues dans le cas d'attaques mécaniques dirigées sur l'alimentation BATV.

La batterie BATV, assure également le fonctionnement d'un horodateur HO piloté par la logique de commande LC via un signal de commande SHO.

Une sonnette BZ de type buzzer peut être également pilotée par le processeur PP par l'intermédiaire d'un signal de commande SBZ issu du processeur PP.

C'est l'algorithme de traitement AT de l'unité principale de traitement UTP qui détermine l'état de fonctionnement du bus externe B2, c'est-à-dire le bus qui véhicule les données soit selon un état normal, soit selon un état de sécurité dans lequel les données telles que le code confidentiel sont chiffrées.

Or, la Demanderesse a observé que des personnes malveillantes pourraient modifier frauduleusement l'algorithme de traitement pour faire passer un code confidentiel en clair du clavier à l'unité principale de traitement et tenter d'intercepter ledit code confidentiel au moment où il est traité par l'unité principale de traitement.

Par conséquent, la Demanderesse a prévu d'équiper l'unité auxiliaire de traitement de moyens propres à contrôler l'authenticité de l'algorithme de traitement AT, et agissant de façon autonome. Corollairement à ces moyens de contrôle, il est prévu des moyens MI propres à inhiber totalement les moyens de transfert de données B2 en cas d'authenticité non confirmée par ledit contrôle.

Selon un mode particulier de réalisation de l'invention, l'algorithme de traitement est personnalisé, c'est-à-dire qu'une signature est associée audit algorithme de traitement.

En pratique, c'est le contenu total des mémoires MV1, MV2 et MM contenant notamment les programmes définissant l'algorithme de traitement, qui est signé. Cette signature est effectuée par les moyens de compression MCO contenus dans l'unité auxiliaire de traitement. Il s'ensuit que le contrôle de l'authenticité de l'algorithme de traitement consiste à comparer la signature du contenu total des mémoires MV1, MV2 et MM à la signature ainsi calculée à partir de ce contenu.

Par exemple, la signature de l'algorithme de traitement est calculée par une méthode de compression soit de type "Data Encryption Standard" (DES) chaîné, soit selon une norme internationale de chiffrement dite "Message Authentification Algorithm" (MAA) portant la référence ISO 8731.

Dans le cadre d'une installation chez les commerçants du terminal selon l'invention, la personnalisation de l'algorithme de traitement s'effectue de la façon suivante.

En un site protégé non public, tel qu'un atelier sécurisé, des clés secrètes sont introduites dans le circuit de protection MC. Le terminal est dans une configuration inhibée, c'est-à-dire qu'il ne peut assurer de fonction de sécurité telle que la saisie de code confidentiel.

Par une opération de chargement quelconque : téléchargement, programmation d'une PROM ou liaison série, un algorithme de traitement ainsi que sa signature calculée préalablement dans ledit site protégé sont chargés dans les mémoires vives MV1 et MV2. La signature couvre l'ensemble des mémoires MV1 et MV2 pour éviter l'utilisation frauduleuse d'un espace mémoire laissé libre.

Le microprocesseur PA, via les moyens de compression MCO, effectue ensuite le calcul de la signature de l'algorithme ainsi chargé dans l'unité principale de traitement, selon une méthode de compression DES chaîné ou MAA. Les moyens de contrôle MA comparent enfin la signature ainsi calculée avec la signature déjà chargée.

En cas d'égalité des signatures, le terminal est opérationnel, c'est-à-dire qu'il n'est plus inhibé et accepte le partage entre l'utilisateur client et l'utilisateur commerçant. Il est à remarquer qu'avant l'obtention de cette égalité, le terminal reste dédié à des fonctions non sécuritaires.

Une fois qu'il est installé chez le commerçant et dédié à l'utilisateur client, le terminal autorise la saisie du code confidentiel et son chiffrement DES selon un format bancaire de type VISA, ISO ou spécifique.

La lecture de la carte bancaire de l'utilisateur client s'effectue par l'intermédiaire du lecteur de carte de paiement LISO ou du lecteur de carte à mémoire LCAM. Ces lecteurs sont reliés par des lignes de commande bidirectionnelles LB au microprocesseur principal PP. Généralement, le terminal est relié à des unités distantes de traitement à travers une liaison télématique TEL. Dans ce cas, un modem MOD est intercalé entre la liaison télématique et le processeur PP pour permettre le transfert du code confidentiel chiffré auxdites unités distantes.

Par ailleurs, il est prévu un signal de commande véhiculé par la ligne de commande SIMP reliant le processeur principal au module d'impression IMP pour permettre l'impression papier des données de la transaction.

Après la phase de désinhibition du terminal mentionnée ci-avant, qui a permis de vérifier l'authenticité de l'algorithme de traitement chargé dans le terminal, celui-ci devient opérationnel, c'est-à-dire qu'il permet à la fois la saisie de données de transactions et la composition du code confidentiel.

Après son installation chez le commerçant, le terminal est encore vulnérable aux modifications logicielles frauduleuses que pourraient effectuer des personnes malveillantes en vue d'intercepter le code confidentiel.

Selon l'invention, la Demanderesse a élaboré une méthode de vérification d'authenticité, en temps réel, de l'algorithme de traitement après installation du terminal sur site non protégé permettant d'apporter une solution à ce problème.

Pendant la phase de désinhibition du terminal mentionnée ci-avant, le microprocesseur PA de l'unité auxiliaire de traitement effectue un découpage en partition des octets de l'algorithme de traitement contenus dans les mémoires MV1, MV2 et MM (par exemple en partition de 128 octets chacune) et calcule un authentifiant associé à chacune de ces partitions selon une méthode de compression DES chaîné ou MAA. Les authentifiants ainsi calculés sont enfin stockés dans les mémoires internes de l'unité auxiliaire de traitement.

L'unité auxiliaire de traitement effectue également le calcul de la signature générale de l'ensemble de l'algorithme de traitement et le stockage de ladite signature générale dans la mémoire interne DA, TA. Les moyens de contrôle MA vérifient enfin la signature générale ainsi calculée et celle précédemment chargée. Si les moyens de contrôle considèrent que la signature est authentique, le terminal est opérationnel.

A partir de cet instant, l'unité auxiliaire de traitement peut alors interroger l'unité principale de traitement pour que celle-ci lui fournisse les octets d'une partition donnée de la mémoire sauvegardée tirée quasi-aléatoirement.

Dans ce cas, l'unité auxiliaire de traitement calcule la signature associée aux octets de cette partition et compare la signature ainsi calculée à celle stockée lors de la phase de désinhibition du terminal.

En cas d'égalité des signatures, le terminal reste opérationnel car cette égalité signifie que l'algorithme de traitement n'a pas été modifié frauduleusement depuis son installation chez le commerçant.

En cas de non-authenticité, l'unité auxiliaire de traitement adopte l'une des deux positions suivantes :
- 1°) effacement des clés secrètes contenues dans le circuit de protection et blocage du clavier; ou bien
- 2°) attente d'une réinitialisation correcte de l'algorithme de traitement par téléchargement.

Il apparaît que la première position est une attitude très contraignante car elle nécessite un retour en usine pour l'introduction de nouvelles clés secrètes tandis que la seconde position est plus souple dans la mesure où elle consiste à effectuer sur site à partir d'une télétransmission les opérations de réinitialisation.

Plus précisément, la réinitialisation de l'algorithme, c'est-à-dire le remplacement par un algorithme complémentaire, s'effectue de la façon suivante.

Lorsque l'algorithme de traitement est contrôlé non authentique, l'algorithme de traitement est remplacé par un algorithme de traitement complémentaire téléchargé via le modem MD dans la mémoire vive MV1, MV2 avec sa signature calculée préalablement en un site public non protégé.

Les moyens de compression MCO calculent ensuite la signature associée à l'algorithme de traitement complémentaire.

Enfin, les moyens de contrôle d'authenticité MA comparent la signature ainsi calculée à la signature chargée via le modem.

La Demanderesse a observé aussi que des personnes malveillantes pourraient tenter d'intercepter un code confidentiel au moment où il passe de l'unité utilisateur à l'unité auxiliaire de traitement.

Ce problème est résolu par l'intermédiaire d'une unité auxiliaire de traitement permettant d'entraver la possibilité d'interception du code confidentiel par espionnage de l'état des lignes et colonnes du clavier.

Dans sa Demande de Brevet français No 86 07901 déposée le 2 juin 1986, la Demanderesse a déjà protégé une unité à clavier de sécurité permettant d'améliorer la sécurité d'une unité à clavier en particulier pour la composition d'un code confidentiel.

Comme décrit dans le Brevet mentionné ci-dessus, l'unité auxiliaire de traitement selon l'invention est capable d'appliquer des impulsions d'interrogation à chacune des lignes du clavier, tout en scrutant les colonnes du clavier, une touche enfoncée produisant un contact ligne-colonne spécifique.

L'unité auxiliaire de traitement est munie en outre de liaisons bidirectionnelles vers les colonnes et lignes du clavier et comporte des moyens pour simuler de faux actionnements de touches. Des impulsions d'interrogation sont appliquées en même temps à au moins une ligne et au moins une colonne, ce qui entrave la possibilité d'interception de code confidentiel par espionnage de l'état des lignes et colonnes du clavier.

L'homme de l'art pourra aller chercher d'autres éléments techniques relatifs à la sécurité du clavier dans la Demande de Brevet susmentionnée dans la mesure où celle-ci fait partie intégrante de la description.

Selon l'invention, l'unité auxiliaire de traitement peut aussi assurer des fonctions de sécurité pour le terminal.

Par exemple, authentifier des données émises à une unité distante telles que les données relatives à la transaction bancaire ou bien vérifier l'authenticité de données reçues d'une unité distante telles que celles d'une liste d'opposition de cartes bancaires envoyée au terminal par l'unité distante.

Ainsi, en utilisant le même schéma de contrôle d'authenticité que celui utilisé pour les données de l'algorithme de traitement, il est calculé une signature sur l'ensemble des données relatives à une transaction bancaire.

Ensuite, le terminal envoie la signature à l'unité distante susceptible de gérer la transaction bancaire via le modem.

L'unité distante reçoit les données relatives à la transaction bancaire et la signature associée. Puis, elle calcule une signature relative aux données de transaction bancaire ainsi reçues et vérifie l'authenticité de la signature ainsi calculée avec la signature ainsi reçue.

Le même type de protection peut être appliqué en sens inverse pour l'authentification des données reçues d'une unité distante.

Avantageusement, le terminal peut être aussi authentifié selon la méthode dite "authentification des extrêmes".

Pour l'authentification du terminal, un mot-clé aléatoire est envoyé par l'unité distante au terminal via la liaison télématique. Au niveau du terminal, le mot-clé est chiffré par les moyens de chiffrement. Ensuite, le mot-clé chiffré est transmis à l'unité distante qui procède à la comparaison du mot-clé chiffré reçu et du mot-clé chiffré par ladite unité distante et vérifie ainsi l'authenticité du terminal.

L'authentification de l'autre extrémité, c'est-à-dire l'unité distante, s'effectue en retournant la méthode mentionnée ci-avant.

Les protections de type logicielles décrites ci-avant selon l'invention peuvent être complétées par des protections physiques visant à améliorer la sécurité du terminal.

Par exemple, le terminal est doté de la propriété de protection physique décrite dans la Demande de Brevet français No 86 03945 déposée par la Demanderesse le 19 mars 1986.

Cette Demande de Brevet fait partie intégrante de la présente description.

De la même façon, la sécurité du terminal vis-à-vis des unités de traitement distantes est améliorée par l'installation décrite dans la Demande de Brevet français No 86 17485 déposée par la Demanderesse le 15 décembre 1986.

Cette Demande de Brevet fait également partie intégrante de la présente description.

En conclusion, l'interception des données secrètes est évitée grâce à l'invention depuis la saisie desdites données jusqu'au destinataire, le plus souvent distant, par la mise en place notamment d'une unité auxiliaire de traitement qui contrôle l'authenticité de l'algorithme de traitement du terminal d'une part et d'un brouillage de type logiciel de la matrice de saisie du code confidentiel entre le clavier du terminal et l'unité auxiliaire de traitement d'autre part.

L'invention apporte ainsi une solution efficace à la sécurisation des données dites secrètes telles que le code confidentiel.

## Revendications

1. Dispositif de traitement de données comprenant :
- une unité utilisateur (UUS) pour la saisie (CL) et/ou la visualisation (VS) de données, et
- une unité principale de traitement (UTP) de données selon un algorithme de traitement prédéterminé (AT), caractérisé en ce qu'il comprend en outre :
- une unité auxiliaire de traitement (UTA) de haute sécurité, connectée pour assurer la totalité des échanges de données entre l'unité utilisateur (UUS) et l'unité principale de traitement (UTP), et comprenant :
. des moyens de sécurisation (MC) de données,
. des moyens de transfert de données (B2) ayant un état normal, et un état de sécurité dans lequel sont sécurisées au moins les données transférées dans un sens, l'algorithme de traitement (AT) de l'unité principale (UTP) déterminant l'état de fonctionnement de ces moyens de transfert de données (B2),
. des moyens (MA) propres à contrôler l'authenticité dudit algorithme de traitement (AT), et agissant de façon autonome, et
. des moyens (MI) propres à inhiber totalement les moyens de transfert de données (B2) en cas d'authenticité non-confirmée par ledit contrôle.

2. Dispositif selon la revendication 1, caractérisé en ce que l'unité principale (UTP) comprend un processeur (PP) adressant deux mémoires (MV1, MV2 et MM) dont l'une (MM) au moins est permanente, et contient les programmes de base dudit algorithme (AT), lequel gère la partition d'adresse entre les deux mémoires (MV1, MV2 et MM), et en ce que les moyens de contrôle d'authenticité (MA) vérifient la signature du contenu des deux mémoires (MV1, MV2 et MM).

3. Dispositif selon la revendication 2, caractérisé en ce que l'autre mémoire (MV1 et MV2) est du type vive ou volatile.

4. Dispositif selon la revendication 2, caractérisé en ce que les moyens de contrôle d'authenticité (MA) vérifient la signature d'au moins une partie du contenu des deux mémoires selon un accès quasi-aléatoire.

5. Dispositif selon l'une quelconque des revendications précédentes, caractérisé en ce que les moyens de sécurisation de données (MC) comprennent des moyens de chiffrement (MCH) et/ou des moyens de compression (MCO) de données.

6. Dispositif selon la revendication 5, caractérisé en ce que la signature du contenu total ou partiel des deux mémoires est effectuée par les moyens de compression (MCO).

7. Dispositif selon l'une quelconque des précédentes revendications, caractérisé en ce qu'il est équipé d'une interface de communication telle qu'un modem (MD).

8. Dispositif selon les revendications 2, 4 et 6, caractérisé en ce que les programmes de base de l'algorithme de traitement (AT) ainsi que la signature préalablement calculée en un site protégé non public sont chargés dans la mémoire permanente en un site également protégé non public.

9. Dispositif selon les revendications 2 à 7, caractérisé en ce que les programmes de base de l'algorithme de traitement (AT) ainsi que sa signature préalablement calculée en un site protégé non public sont chargés via l'interface de communication (MD) dans la mémoire vive (MV1 et MV2) en un site qui peut être non protégé, en ce que les moyens de compression (MCO) calculent la signature des programmes de base ainsi chargés, et en ce que les moyens de contrôle d'authenticité (MA) comparent la signature ainsi calculée à la signature chargée via l'interface de communication (MD).

10. Dispositif selon la revendication 7, caractérisé en ce que lorsque l'algorithme de traitement est contrôlé non authentique, l'algorithme de traitement est remplacé par un algorithme de traitement complémentaire chargé via l'interface de communication (MD) dans la mémoire vive (MV1 et MV2) avec sa signature calculée préalablement en un site protégé non public, en ce que les organes de compression (MCO) calculent la signature associée à l'algorithme de traitement complémentaire et en ce que les moyens de contrôle d'authenticité (MA) comparent la signature ainsi calculée via l'interface de communication.

11. Dispositif selon l'une quelconque des revendications précédentes, caractérisé en ce que les données à traiter comprennent des données de type code confidentiel.

12. Dispositif selon l'une quelconque des revendications précédentes, caractérisé en ce que l'unité utilisateur comprend :
un clavier (CL) propre à l'analyse matricielle par ligne et par colonne tandis que l'unité auxiliaire de traitement est capable d'appliquer des impulsions d'interrogation à chacune des lignes du clavier, tout en scrutant les colonnes du clavier, une touche enfoncée produisant un contact ligne-colonne spécifique, l'unité auxiliaire de traitement (UTA) étant munie de liaisons bidirectionnelles vers certaines au moins des colonnes et lignes du clavier (CL) et comportant des moyens pour simuler de faux actionnement de touches, certaines au moins des impulsions d'interrogation étant appliquées en même temps à au moins une ligne et au moins une colonne, ce qui entrave la possibilité d'interception du code confidentiel par espionnage de l'état des lignes et colonnes du clavier.

13. Dispositif selon l'une quelconque des revendications précédentes, caractérisé en ce que les moyens de sécurisation de données (MC) sont aptes à authentifier des données reçues d'une unité distante par le modem (MD), ou à certifier des données de transaction émises à ladite unité distante par l'intermédiaire dudit modem (MD), ou à authentifier le terminal.

14. Dispositif selon l'une quelconque des revendications précédentes, caractérisé en ce qu'il est logé dans un boîtier préhensible à la main.

15. Utilisation du dispositif selon l'une quelconque des précédentes revendications pour l'authentification d'une installation comprenant ledit dispositif relié à au moins une unité distante.

## Patentansprüche

1. Vorrichtung zur Datenverarbeitung umfassend:
- eine Benutzereinheit (UUS) für die Erfassung (CL) und/oder die Anzeige (VS) von Daten, und
- eine Hauptverarbeitungseinheit (UTP) von Daten gemäß einem vorbestimmten Verarbeitungsalgorithmus (AT), **dadurch gekennzeichnet**, daß sie ferner umfaßt:
- eine Hilfseinheit zur Hochsicherheitsverarbeitung (UTA), die verbunden ist, um die Gesamtheit des Austausches von Daten zwischen der Benutzereinheit (UUS) und der Hauptverarbeitungseinheit (UTP) sicherzustellen und umfaßt:
· Einrichtungen zum Sichermachen von Daten (MC),
· Einrichtungen zur Übertragung von Daten (B2), die einen normalen Zustand und einen Sicherheitszustand haben, in dem zumindest die in einer Richtung übertragenen Daten sichergemacht sind, wobei der Verarbeitungsalgorithmus (AT) der Haupteinheit (UTP) den Arbeitszustand dieser Einrichtungen zur Übertragung von Daten (B2) bestimmt,
· Einrichtungen (MA), die die Authentizität des genannten Verarbeitungsalgorithmus (AT) kontrollieren können und in autonomer Weise handeln, und
· Einrichtungen (MI), die vollständig die Einrichtungen zur Übertragung von Daten (B2) im Fall einer von der genannten Kontrolle nicht bestätigten Authentizität hemmen können.

2. Vorrichtung gemäß dem Anspruch 1, **dadurch gekennzeichnet**, daß die Haupteinheit (UTP) einen Prozessor (PP) umfaßt, der zwei Speicher (MV1, MV2 und MM) adressiert, von denen wenigstens einer (MM) permanent ist und die Grundprogramme des genannten Algorithmus (AT) enthält, der die Adressenaufteilung zwischen den zwei Speichern (MV1, MV2 und MM) lenkt, und daß die Einrichtungen zur Kontrolle der Authentizität (MA) die Kennung des Inhalts der zwei Speicher (MV1, MV2 und MM) verifizieren.

3. Vorrichtung gemäß dem Anspruch 2, **dadurch gekennzeichnet**, daß der andere Speicher (MV1 und MV2) vom schnellen oder flüchtigen Typ ist.

4. Vorrichtung gemäß dem Anspruch 2, **dadurch gekennzeichnet**, daß die Einrichtungen zur Authentizitätskontrolle (MA) die Kennung von wenigstens einem Teil des Inhalts der zwei Speicher gemäß einem quasi-zufälligen Zugriff verifizieren.

5. Vorrichtung gemäß irgendeinem der vorhergehenden Ansprüche, **dadurch gekennzeichnet**, daß die Einrichtungen zum Sichermachen von Daten (MC), Chiffriereinrichtungen (MCH) und/oder Kompressionseinrichtungen (MCO) für Daten umfassen.

6. Vorrichtung gemäß Anspruch 5, **dadurch gekennzeichnet**, daß die Kennung des Gesamt- oder Teilinhalts der zwei Speicher durch die Kompressionseinrichtungen (MCO) ausgeführt wird.

7. Vorrichtung gemäß irgendeinem der vorhergehenden Ansprüche, **dadurch gekennzeichnet**, daß sie mit einer Kommunikationsschnittstelle, wie ein Modem (MD) ausgerüstet ist.

8. Vorrichtung gemäß den Ansprüchen 2, 4 und 6, **dadurch gekennzeichnet**, daß die Grundprogramme des Verarbeitungsalgorithmus (AT) sowie die vorhergehend an einer geschützten, nicht öffentlichen Stelle berechnete Kennung an einer ebenfalls geschützten, nicht öffentlichen Stelle geladen werden.

9. Vorrichtung gemäß den Ansprüchen 2 bis 7, **dadurch gekennzeichnet**, daß die Grundprogramme des Verarbeitungsalgorithmus (AT) sowie seine vorhergehend an einer geschützten, nicht öffentlichen Stelle berechnete Kennung über die Kommunikationsschnittstelle (MD) in den schnellen Speicher (MV1 und MV2) an einer Stelle geladen werden, die ungeschützt sein kann, daß die Kompressionseinrichtungen (MCO) die Kennung der derart geladenen Grundprogramme berechnen, und daß die Einrichtungen zur Authentizitätskontrolle (MA) die derart berechnete Kennung mit der Kennung vergleichen, die über die Kommunikationsschnittstellen(MD) geladen worden ist.

10. Vorrichtung gemäß dem Anspruch 7, **dadurch gekennzeichnet**, daß, wenn der Verarbeitungsalgorithmus als nicht authentisch kontrolliert wird, der Verarbeitungsalgorithmus durch einen komplementären Verarbeitungsalgorithmus ersetzt wird, der über die Kommunikationsschnittstelle (MD) in den schnellen Speicher (MV1 und MV2) mit seiner vorhergehend an einer geschützten, nicht öffentlichen Stelle berechneten Kennung geladen wird, daß die Kompressionsorgane (MCO) die mit dem komplementären Verarbeitungsalgorithmus verbundene Kennung berechnen und daß die Einrichtungen zur Authentizitätskontrolle (MA) die derart berechnete Kennung über die Kommunikationsschnittstelle vergleichen.

11. Vorrichtung gemäß irgendeinem der vorhergehenden Ansprüche, **dadurch gekennzeichnet**, daß die zu verarbeitenden Daten Daten vom Typ mit vertraulichem Code umfassen.

12. Vorrichtung gemäß irgendeinem der vorhergehenden Ansprüche, **dadurch gekennzeichnet**, daß die Benutzereinheit umfaßt:
eine Tastatur (CL), die zur matrixförmigen Analyse mit Zeile und Spalte geeignet ist, während die Hilfsverarbeitungseinheit Abfrageimpulse an jede der Zeilen der Tastatur anwenden kann, wobei die Spalten der Tastatur durchmustert werden, ein starker Anschlag einen bestimmten Kontakt Zeile-Spalte erzeugt, die Hilfsverarbeitungseinheit (UTA) mit Zweirichtungsverbindungen zu gewissen wenigstens der Spalten und Zeilen der Tastatur (CL) versehen sind und Einrichtungen umfassen, um eine falsche Anschlagsbetätigung zu simulieren, gewisse wenigstens der Abfrageimpulse gleichzeitig auf wenigstens eine Zeile und wenigstens eine Spalte angewendet werden, was die Möglichkeit des Abfangens des vertraulichen Codes durch Spionage des Zustands der Zeilen und Spalten der Tastatur hindert.

13. Vorrichtung gemäß irgendeinem der vorhergehenden Ansprüche, **dadurch gekennzeichnet**, daß die Einrichtungen zum Sichermachen von Daten (MC) Daten beglaubigen können, die von einer entfernten Einheit durch das Modem (MD) empfangen worden sind, oder Übertragungsdaten bestätigen können, die zu der genannten entfernten Einheit mittels des genannten Modems (MD) ausgesendet werden, oder das Terminal beglaubigen können.

14. Vorrichtung gemäß irgendeinem der vorhergehenden Ansprüche, **dadurch gekennzeichnet**, daß sie in einem von Hand ergreifbaren Gehäuse untergebracht ist.

15. Verwendung der Vorrichtung nach irgendeinem der vorhergehenden Ansprüche zum Beglaubigen einer Einrichtung, die die genannte Vorrichtung umfaßt, die mit wenigstens einer entfernten Einheit verbunden ist.

## Claims

1. Data processing device comprising:
- a user unit (USU) for entering (KP) and/or viewing (VW) data, and
- a main unit (MPU) for processing data according to a predetermined processing algorithm (PA), characterized in that it furthermore comprises:
- a high-security auxiliary processing unit (APU) connected up so as to ensure all of the data exchanges between the user unit (USU) and the main processing unit (MPU), and comprising:
· data-securing means (CM),
· means (B2) of transferring data having a normal state, and a security state in which at least the data transferred in one direction are made secure, the processing algorithm (PA) of the main unit (MPU) determining the state of operation of these data transfer means (B2),
· means (AM) suitable for checking the authenticity of the said processing algorithm (PA), and acting autonomously, and
· means (DM) suitable for totally disabling the data transfer means (B2) in the event of unconfirmed authenticity by the said check.

2. Device according to Claim 1, characterized in that the main unit (MPU) comprises a processor (MP) addressing two memories (MV1, MV2 and MM), of which one (MM) at least is permanent, and contains the basic programs of the said algorithm (PA), which manages the address partition between the two memories (MV1, MV2 and MM), and in that the authenticity checking means (AM) verify the signature of the contents of the two memories (MV1, MV2 and MM).

3. Device according to Claim 2, characterized in that the other memory (MV1 and MV2) is of the random-access or volatile type.

4. Device according to Claim 2, characterized in that the authenticity checking means (AM) verify the signature of at least part of the contents of the two memories according to a quasi-random access.

5. Device according to any one of the preceding claims, characterized in that the data-securing means (CM) comprise data encipherment means (ENM) and/or compression means (COM).

6. Device according to Claim 5, characterized in that signature of the complete or partial contents of the two memories is performed by the compression means (COM).

7. Device according to any one of the preceding claims, characterized in that it is equipped with a communication interface such as a modem (MD).

8. Device according to Claims 2, 4 and 6, characterized in that the basic programs of the processing algorithm (PA) as well as the signature previously computed at a non-public protected site are loaded into the permanent memory at a likewise non-public protected site.

9. Device according to Claims 2 to 7, characterized in that the basic programs of the processing algorithm (PA) as well as its signature previously computed at a non-public protected site are loaded via the communication interface (MD) into the random-access memory (MV1 and MV2) at a site which may not be protected, in that the compression means (COM) compute the signature of the basic programs thus loaded, and in that the authenticity checking means (AM) compare the signature thus computed with the signature loaded via the communication interface (MD).

10. Device according to Claim 7, characterized in that when the processing algorithm is checked as non-authentic, the processing algorithm is replaced by a complementary processing algorithm loaded via the communication interface (MD) into the random-access memory (MV1 and MV2) with its signature previously computed at a non-public protected site, and in that the compression facilities (COM) compute the signature associated with the complementary processing algorithm and in that the authenticity checking means (AM) compare the signature thus computed via the communication interface.

11. Device according to any one of the preceding claims, characterized in that the data to be processed comprise data of confidential code type.

12. Device according to any one of the preceding claims, characterized in that the user unit comprises: a keypad (KP) suitable for row-wise and column-wise matrix analysis whilst the auxiliary processing unit is capable of applying interrogation pulses to each of the rows of the keypad, while scanning the columns of the keypad, a depressed button producing a specific row/ column contact, the auxiliary processing unit (APU) being furnished with bidirectional links towards some at least of the columns and rows of the keypad (KP) and including means for simulating false actuation of buttons, some at least of the interrogation pulses being applied at the same time to at least one row and at least one column, this impeding the possibility of intercepting the confidential code by spying on the state of the rows and columns of the keypad.

13. Device according to any one of the preceding claims, characterized in that the data-securing means (CM) are able to authenticate data received from a remote unit via the modem (MD), or to certify transaction data transmitted to the said remote unit by way of the said modem (MD), or to authenticate the terminal.

14. Device according to any one of the preceding claims, characterized in that it is housed in a package which can be grasped in the hand.

15. Use of the device according to any one of the preceding claims for the authentification of an installation comprising the said device linked to at least one remote unit.
